# EUROPEAN PATENT APPLICATION

(11) **EP 4 825 754 A1**
(43) Date of publication of application: **21.10.2026**
(21) Application number: 24916305.6
(22) Date of filing: 25.06.2024
(51) Int. Cl.: B65G 1/04

(54) **BIOLOGICAL SPECIMEN STORAGE SYSTEM**

(30) Priority: 11.01.2024 CN 202410039719
(71) Applicant: SHANGHAI ORIGINCELL BIOLOGICAL CRYO EQUIPMENT CO., LTD., Shanghai 201203 (CN)
(72) Inventor: QU, Jianguo, Shanghai 201203 (CN); CAO, Yunxin, Shanghai 201203 (CN); XU, Shukui, Shanghai 201203 (CN)
(74) Representative: Bayramoglu et al.
(86) International application number: PCT/CN2024/101293
(87) International publication number: WO 2025/148249

(57) **Abstract**

The present disclosure discloses a biological sample storage system, comprising an operation compartment and a storage compartment, wherein the operation compartment is arranged above the storage compartment and configured to extract or store sample tubes in the storage compartment; an extraction member is arranged in the operation compartment; the extraction member is provided with an extraction hook mating piece; the extraction hook mating piece can mate with and extract cryovials and/or cryovial sleeve barrels and/or a transfer tank cover and/or a storage compartment cover of the storage compartment. The present disclosure has the beneficial effects that the extraction member can transfer straw barrels to realize the access to cryovials, and can also move to open the storage compartment cover of the storage compartment, thereby achieving multiple functions by a single mechanism. The limiting opening formed on the fixing sleeve can limit the limiting block on the storage compartment cover of the storage compartment, thereby preventing the storage compartment cover from rotating during transfer. The fixing sleeve can limit the straw barrel, thereby preventing the straw barrel S1 from shaking during transfer.

## Description

### TECHNICAL FIELD

The present disclosure relates to the technical field of sample storage, particularly to a biological sample storage system.

### BACKGROUND

In the field of sample storage, low-temperature access is used for low-temperature storage of biological samples such as blood samples, vaccines, viral strains and the like, which makes the samples maintained at a continuous low temperature state to preserve their activity.

In the existing automated sample storage devices, functions such as cover opening, grabbing and cover moving are generally arranged separately, resulting in numerous mechanisms arranged inside the operation compartment, cumbersome working procedures, difficulties in real-time monitoring and automated operation, so there is an urgent demand for a novel storage system that simplifies the mechanisms in the operation compartment while realizing multi-functional applications and guaranteeing stability and safety.

### SUMMARY

The objective of this section is to summarize some aspects of the embodiments of the present disclosure and briefly introduce some preferred embodiments. Simplifications or omissions may be made in this section, the abstract and the title of the present application to avoid obscuring the purpose of this section, the abstract and the title of the present application, and such simplifications or omissions shall not be construed to limit the scope of the present disclosure.

In view of the problems as described above or existing in the prior art, the present disclosure is proposed.

Accordingly, the objective of the present disclosure is to provide a biological sample storage system that can grab multiple cryovials, cryovial sleeve barrels and the storage compartment cover of the storage compartment via the extraction member arranged in the operation compartment, and the extraction member can implement position limiting during grabbing to avoid displacement of the grabbed objects and guarantee stability and safety, thereby realizing the access to cryovials; and a cover moving mechanism can slide the compartment cover to facilitate subsequent operations of the extraction members, transfer tanks can mate with the operation compartment, a cover opening mechanism can open the top covers of the transfer tanks, and the extraction members can take cryovials out of the transfer tanks and place the cryovials into the storage compartment.

To solve the above technical problems, the present disclosure provides the following technical solution: a biological sample storage system, comprising an operation compartment and a storage compartment, wherein the operation compartment is arranged above the storage compartment and configured to extract or store sample tubes in the storage compartment;

an extraction member is arranged in the operation compartment, and the extraction member is provided with an extraction hook mating piece; the extraction hook mating piece mates with and extracts cryovials and/or cryovial sleeve barrels and/or a transfer tank cover and/or a storage compartment cover of the storage compartment.

As a preferred embodiment of the biological sample storage system of the present disclosure, the extraction hook mating piece includes a male snap-fit member; each of the cryovials and/or cryovial sleeve barrels and/or transfer tank cover and/or storage compartment cover is provided with a female snap-fit member; the male snap-fit member is snap-fitted onto the female snap-fit member; the female snap-fit member limits the male snap-fit member in the vertical direction.

As a preferred embodiment of the biological sample storage system of the present disclosure, the extraction member includes an extraction X-axis moving assembly and an extraction Z-axis moving assembly, wherein the extraction hook mating piece is arranged on the extraction Z-axis moving assembly; the extraction Z-axis moving assembly drives the extraction hook mating piece to move up and down or extend and retract in the Z-axis direction; the extraction Z-axis moving assembly is arranged on the extraction X-axis moving assembly; the extraction X-axis moving assembly drives the extraction Z-axis moving assembly to move in the X-axis direction.

As a preferred embodiment of the biological sample storage system of the present disclosure, the extraction hook mating piece further includes an extraction rod, an extraction sleeve and a male snap-fit member, wherein the extraction sleeve is sleeved around the extraction rod, and the extraction rod moves up and down in the extraction sleeve relative to the extraction sleeve; the extraction rod and the extraction sleeve move up and down in the Z-axis direction; the male snap-fit member is arranged at the lower end of the extraction rod.

As a preferred embodiment of the biological sample storage system of the present disclosure, the extraction Z-axis moving assembly includes a Z-axis support frame, a drive chain and a Z-axis drive cylinder, wherein the lower end of the Z-axis support frame is slidably arranged on the X-axis moving assembly; a Z-axis vertical rail is arranged at one side of the Z-axis support frame close to the extraction sleeve; the Z-axis drive cylinder drives the extraction sleeve to move up and down on the Z-axis vertical rail; the drive chain drives the extraction rod to move up and down.

As a preferred embodiment of the biological sample storage system of the present disclosure, the lower end of the extraction rod extends downward to form a semi-arc end with a central cavity; the lower end surface of the semi-arc end is connected with a snap-fit plate; one side end of the snap-fit plate is recessed inward to form a male snap-fit groove; the semi-arc end and the snap-fit plate together form the male snap-fit member.

As a preferred embodiment of the biological sample storage system of the present disclosure, the male snap-fit groove includes an inner groove section and an outer groove section, wherein the outer side of the inner groove section is connected with the outer groove section; the outer groove section is gradually narrowed from outside to inside; the inner groove section is U-shaped.

As a preferred embodiment of the biological sample storage system of the present disclosure, the lower end of the extraction sleeve extends outward to form a fixing sleeve; the snap-fit plate is arranged below the fixing sleeve.

As a preferred embodiment of the biological sample storage system of the present disclosure, a limiting opening is formed on the side wall of the fixing sleeve; the limiting opening can engage with a limiting block arranged on the transfer tank cover and/or the storage compartment cover of the storage compartment.

As a preferred embodiment of the biological sample storage system of the present disclosure, the upper end of the extraction rod is provided with an extraction rod limiting block for limiting the extraction height of the extraction rod in the Z-axis direction.

As a preferred embodiment of the biological sample storage system of the present disclosure, the lower end of the extraction sleeve is provided with a stop block; the stop block is located between the extraction sleeve and the extraction rod and limits the extension length of the extraction rod.

As a preferred embodiment of the biological sample storage system of the present disclosure, the operation compartment further includes a cover moving mechanism; the cover moving mechanism is located above the opening of the storage compartment; the cover moving mechanism includes a cover moving plate base and a Y-axis slide rail; the cover moving plate base is slidably arranged on the Y-axis slide rail.

As a preferred embodiment of the biological sample storage system of the present disclosure, the upper end surface of the storage compartment cover of the storage compartment is provided with an extraction handle; the extraction handle is snap-fitted with the male snap-fit member.

As a preferred embodiment of the biological sample storage system of the present disclosure, the upper end surface of the storage compartment cover of the storage compartment is provided with the extraction handle and an extraction snap-fit block; the extraction handle and the extraction snap-fit block form the female snap-fit member of the storage compartment cover; the extraction handle engages with the male snap-fit groove of the snap-fit plate; the extraction snap-fit block engages with the limiting opening of the fixing sleeve.

As a preferred embodiment of the biological sample storage system of the present disclosure, the extraction handle is cylindrical, and a truncated cone is formed in the upper free end of the extraction handle for snap-fit mating; the extraction snap-fit block is arranged beside the extraction handle and is a roughly trapezoidal block; the extraction snap-fit block engages with the male snap-fit groove of the snap-fit plate.

As a preferred embodiment of the biological sample storage system of the present disclosure, the storage compartment is further provided with a cover opening mechanism; the cover opening mechanism is configured to open the cover of the transfer tank.

As a preferred embodiment of the biological sample storage system of the present disclosure, the storage compartment further includes a central rotating shaft and a honeycomb plate, wherein the honeycomb plate is rotatably arranged on the central rotating shaft; a plurality of cryovials and/or cryovial sleeve barrels with the cryovials inside are inserted into the honeycomb plate;
both the upper ends of the cryovial and the cryovial sleeve barrel are provided with extraction handles; the extraction handle is cylindrical, and a truncated cone is formed in the upper free end of the extraction handle for snap-fit mating.

As a preferred embodiment of the biological sample storage system of the present disclosure, the upper end of the cryovial sleeve barrel is flared.

As a preferred embodiment of the biological sample storage system of the present disclosure, the storage compartment further includes a support barrel; the lower part of the central rotating shaft is connected with the support barrel; a rotating shaft drive is arranged above the central rotating shaft; the rotating shaft drive rotates the central rotating shaft; liquid nitrogen is contained in the storage compartment.

As a preferred embodiment of the biological sample storage system of the present disclosure, the operation compartment further comprises a barcode scanner; the barcode scanner is arranged at one side of the extraction member.

As a preferred embodiment of the biological sample storage system of the present disclosure, the biological sample storage system further includes a lifting mechanism, wherein the lifting mechanism is arranged at one side of the storage compartment and located at the lower end of the operation compartment for lifting the transfer tank to enter the operation compartment.

As a preferred embodiment of the biological sample storage system of the present disclosure, the lifting mechanism includes a connecting frame, a lifting frame and a support guide rail, wherein the connecting frame is connected with the outer wall of the storage compartment; the lower end of the connecting frame is provided with the support guide rail; the support guide rail is vertically slidably connected with the lifting frame; the support guide rail drives the lifting frame to lift.

As a preferred embodiment of the biological sample storage system of the present disclosure, a liquid nitrogen valve assembly is arranged at the side of the storage compartment; a support base and a wheel assembly are arranged at the bottom end of the storage compartment.

As a preferred embodiment of the biological sample storage system of the present disclosure, the fixing sleeve is vertically slidably connected with the extraction rod.

The present disclosure has the following beneficial effects: 1, the extraction member can transfer straw barrels, realize access to cryovials, and open the storage compartment cover, so that multiple purposes are achieved by a single mechanism; 2, the limiting opening of the fixing sleeve can limit the limiting block on the storage compartment cover of the storage compartment to prevent the storage compartment cover from rotating during transfer; 3, the fixing sleeve can limit the straw barrel to avoid shaking of the straw barrel during transfer; 4, the extraction rod limiting block and stop block arranged on the extraction rod can limit the vertical extension length of the extraction rod; 5, a barcode scanner is arranged on the lifting path to identify the cryovial sleeve barrels during lifting, which is convenient and efficient; 6, the cover moving mechanism is capable of translating the storage compartment cover in the Y-axis direction and mates with the extraction member to move the storage compartment cover; 7, the arrangement of the lifting mechanism allows the transfer tank to quickly mate with the operation compartment, and the utilization of the extraction member allows the cryovials in the transfer tank to be placed in the storage compartment, thereby greatly improving working efficiency; 8, the present disclosure simplifies a large number of structures and working procedures inside the operation compartment to realize fully automatic operation, which not only ensures stability and safety, but also boosts overall efficiency.

### BRIEF DESCRIPTION OF THE DRAWINGS

To more clearly explain the technical solutions of the embodiments of the present disclosure, drawings required to be used in the descriptions of the embodiments will be simply introduced. Obviously, the drawings in the following description are merely some embodiments of the present disclosure. Persons of ordinary skill in the art can also obtain other drawings according to these drawings without creative efforts. Wherein:
FIG. 1 is an overall schematic diagram of a biological sample storage system.
FIG. 2 is a schematic diagram of an operation compartment of a biological sample storage system.
FIG. 3 is a schematic diagram of an extraction member of a biological sample storage system.
FIG. 4 is an enlarged view of F1 in FIG. 3 of a biological sample storage system.
FIG. 5 is a partial sectional enlarged view of a drive chain of a biological sample storage system.
FIG. 6 is a partial sectional enlarged view of a male snap-fit member of a biological sample storage system.
FIG. 7 is a schematic diagram of a cover moving mechanism of a biological sample storage system.
FIG. 8 is a schematic diagram of a straw barrel of a biological sample storage system.
FIG. 9 is a schematic diagram of a cover opening mechanism of a biological sample storage system.
FIG. 10 is a schematic diagram of a storage compartment of a biological sample storage system.
FIG. 11 is a schematic diagram of the interior of a storage compartment of a biological sample storage system.
FIG. 12 is a schematic diagram of the lifting mechanism of the biological sample storage system.

Reference numbers:
operation compartment, 1; storage compartment, 2; extraction member, 11; extraction hook mating piece, 111; male snap-fit member, 1111; female snap-fit member, 19; extraction X-axis moving assembly, 112; extraction Z-axis moving assembly, 113; extraction rod, 1113; extraction sleeve, 1114; Z-axis support frame, 1131; drive chain, 1132; Z-axis drive cylinder, 1133; Z-axis vertical rail, 1134; semi-arc end, 11113; snap-fit plate, 11111; male snap-fit groove, 11112; fixing sleeve, 1115; limiting opening, 1116; cover moving mechanism, 12; cover moving plate base, 121; Y-axis slide rail, 122; extraction handle, 11121; extraction snap-fit block, 11122; cover opening mechanism, 22; central rotating shaft, 23; honeycomb plate, 24; support barrel, 25; rotating shaft drive, 26; barcode scanner, 18; lifting mechanism, 3; connecting frame, 31; lifting frame, 32; support guide rail, 33; liquid nitrogen valve assembly, 29; straw barrel, S1; straw barrel sleeve, S2; transfer tank, S6; storage compartment cover, S7.

### DETAILED DESCRIPTION OF THE EMBODIMENTS

To make the above objectives, features and advantages of the present disclosure more obvious and understandable, the specific embodiments of the present disclosure will be described in detail with reference to the accompanying drawings.

Many specific details will be set forth in the following description so as to sufficiently understand the present disclosure. However, the present disclosure can also be implemented by using other methods different from those described herein. Those skilled in the art can make equivalent modifications without departing from the essence of the present disclosure, and therefore the present disclosure is not limited to the specific embodiments disclosed hereinafter.

Furthermore, "one embodiment" or "embodiment" herein refers to specific features, structures or characteristics contained in at least one implementation mode of the present disclosure. "In one embodiment" occurring in different places of this specification does not refer to the same embodiment, nor are separate or alternative embodiments mutually exclusive with other embodiments.

### Example 1

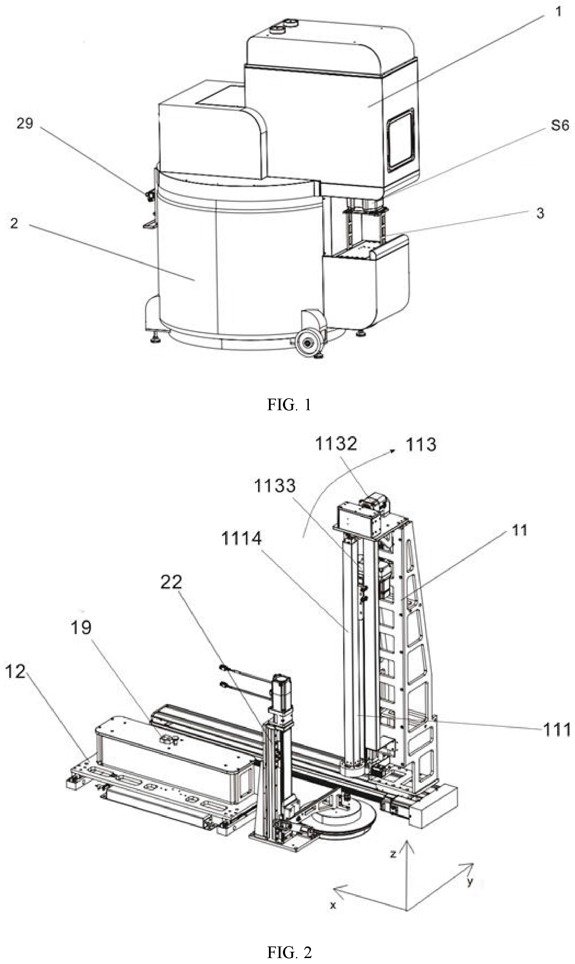

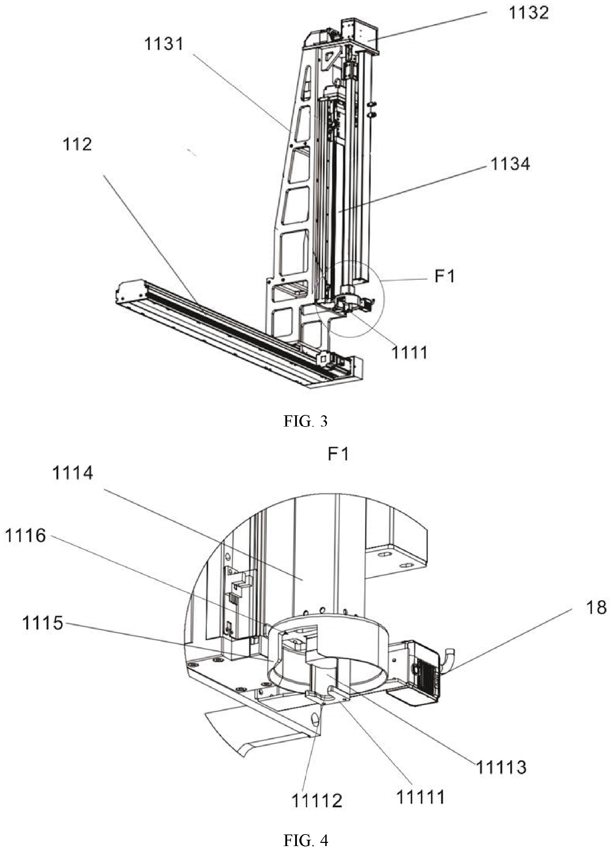

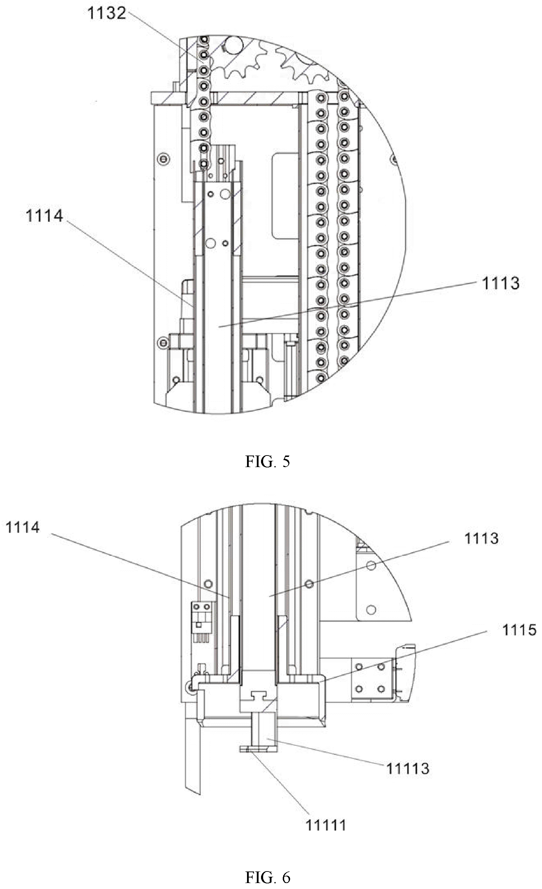

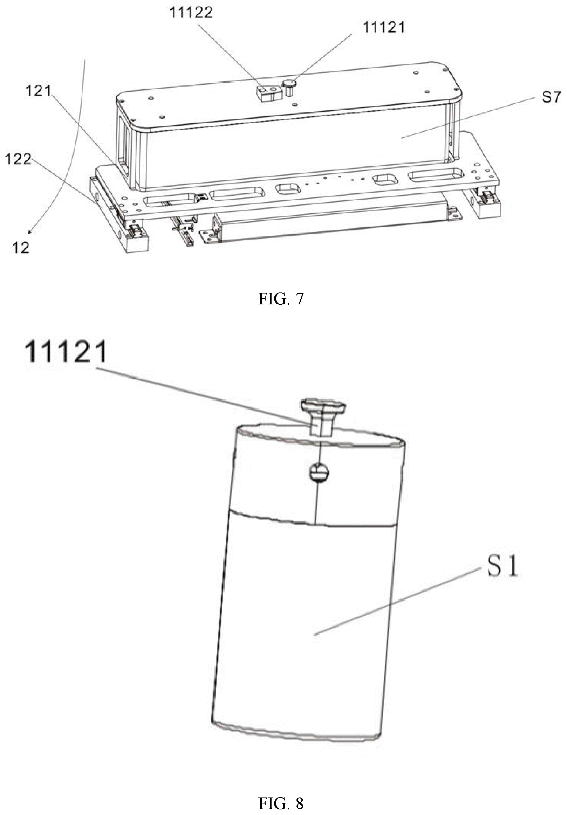

Referring to FIGs. 1-8, illustrated herein is Example 1 of the present disclosure. This example provides a biological sample storage system, including an operation compartment 1 and a storage compartment 2, wherein the operation compartment 1 is arranged above the storage compartment 2 and configured to extract or store sample tubes in the storage compartment 2;
an extraction member 11 is arranged in the operation compartment 1, and the extraction member 11 is provided with an extraction hook mating piece 111; the extraction hook mating piece 111 mates with and extracts cryovials and/or cryovial sleeve barrels and/or a transfer tank S6 cover and/or a storage compartment cover S7 of the storage compartment, respectively.

Preferably, the cryovials are stored and frozen through the storage compartment; the operation compartment 1 is arranged above the storage compartment 2, and the extraction member 11 is arranged inside the operation compartment 1; the extraction member 11 includes the extraction hook mating piece 111; the cryovials, cryovial sleeve barrels, transfer tank S6 cover and storage compartment cover S7 can be extracted through the extraction hook mating piece 111; in the existing low-temperature storage systems, when cells or other biological samples stored in the cryovials need to be stored, extracted or transferred, the cryovials are transferred into the transfer tank S6, or the cryovials are first loaded into the cryovial sleeve barrels and then placed into the transfer tank S6 so as to conduct transfer or access operation by utilizing the transfer tank S6; the transfer tank S6 mates with the storage device, and the transfer tank S6 and the storage device are opened to deliver the cryovials therein to the target positions; in this process, the cryovials or cryovial sleeve barrels must first be loaded into or taken out from the transfer tank S6, the storage compartment cover S7 of the storage device is opened, and the cryovials are transferred to the target storage positions; to realize full automation for the above process, grippers for opening the transfer tank S6 cover and opening the storage compartment cover S7 of the storage compartment and extraction arms for picking and placing the cryovials or extracting the cryovial sleeve barrels are required to be arranged; in addition, multiple motion control systems matching different operation targets also need to be arranged, resulting in a complicated overall structure and high cost. The operation compartment of the present disclosure is internally provided with the extraction member. The extraction member is provided with an extraction hook mating piece which can respectively mate with and extract cryovials and/or cryovial sleeve barrels, and/or transfer tank S6 cover and/or the storage compartment cover S7 of the storage compartment. By utilizing the extraction member, multi-functional extraction and storage are realized. The operation compartment 1 is relatively simple in structure, which greatly reduces costs and provides more stable operation. By utilizing the extraction hook mating piece 111, multiple functions can be realized while guaranteeing stability and safety.

In summary, the extraction hook mating piece 111 can mate with and extract the cryovials and/or cryovial sleeve barrels and/or transfer tank S6 cover and/or storage compartment cover S7 of the storage compartment, thereby simplifying the internal structure and workflow of the operation compartment 1, achieving fully automated operation, ensuring stability and safety during transfer, and improving overall efficiency.

### Example 2

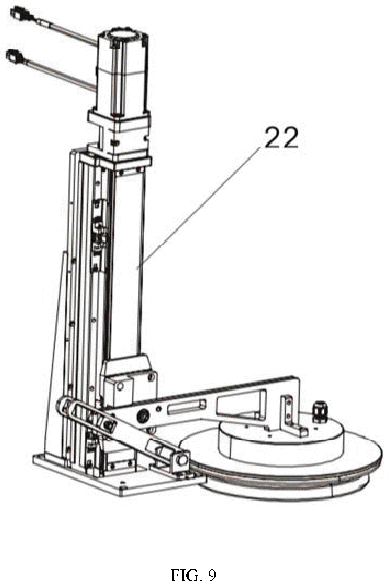

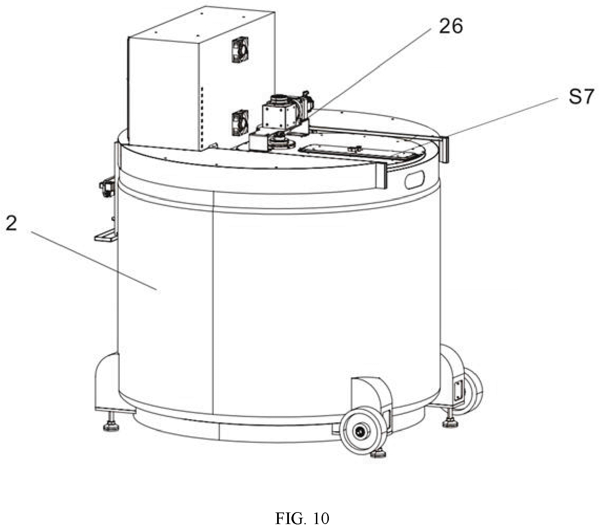

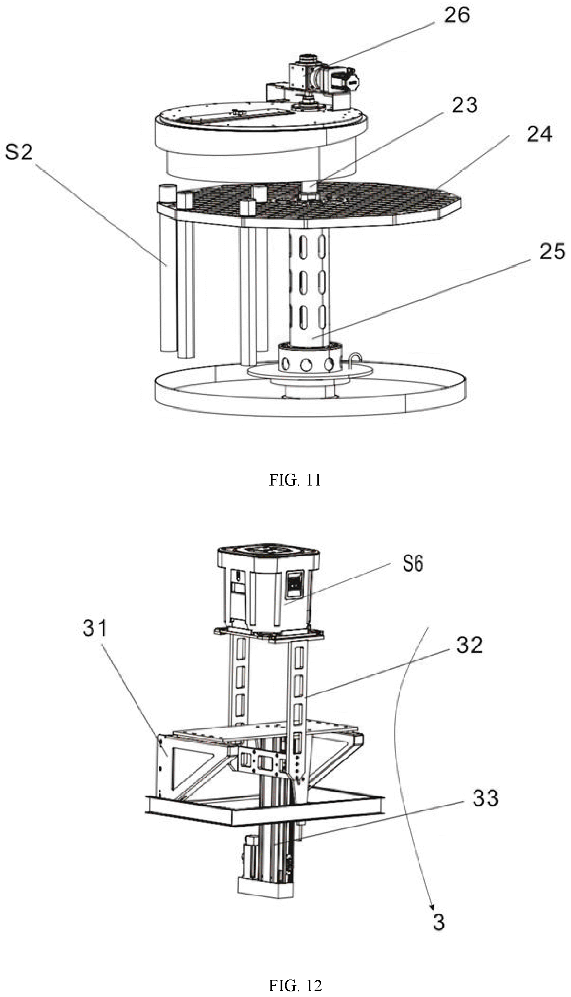

Referring to FIGs. 1-12, illustrated herein is Example 2 of the present disclosure. On the basis of the previous example, this example provides a biological sample storage system, including an operation compartment 1 and a storage compartment 2, wherein the operation compartment 1 is arranged above the storage compartment 2 and configured to extract or store sample tubes in the storage compartment 2;
an extraction member 11 is arranged in the operation compartment 1, and the extraction member 11 is provided with an extraction hook mating piece 111; the extraction hook mating piece 111 mates with and extracts cryovials and/or cryovial sleeve barrels and/or a transfer tank S6 cover and/or a storage compartment cover S7 of the storage compartment, respectively.

The cryovials are stored and frozen through the storage compartment 2; the operation compartment 1 is arranged above the storage compartment 2, and the extraction member 11 is arranged inside the operation compartment 1; the extraction member 11 includes the extraction hook mating piece 111; the cryovials, cryovial sleeve barrels and storage compartment cover S7 can be extracted through the extraction hook mating piece 111, thereby simplifying the internal structure and workflow of the operation compartment 1. By utilizing the extraction hook mating piece 111, multiple functions can be realized while guaranteeing stability and safety.

In a preferred further embodiment of this example, the extraction hook mating piece includes a male snap-fit member; each of the cryovials and/or the cryovial sleeve barrels, and/or transfer tank S6 cover, and/or the storage compartment cover S7 of the storage compartment is provided with a female snap-fit member; the male snap-fit member can be snap-fitted onto the female snap-fit member; the female snap-fit member limits the male snap-fit member in the vertical direction. The male snap-fit member arranged on the extraction hook mating piece limits the corresponding female snap-fit member in the vertical direction, and no limitation may be set in other directions. When snap-fitting mating is needed, snap fitting is conducted from the unrestricted direction to achieve vertical limiting, so as to realize extraction, storage or other operations in the vertical direction. Such an arrangement enables the extraction hook mating piece to realize multi-functional extraction or storage of the cryovials and/or cryovial sleeve barrels and/or transfer tank S6 cover and/or the storage compartment cover S7 of the storage compartment at low cost.

In a preferred further embodiment of this example, the extraction member 11 includes an extraction X-axis moving assembly 112 and an extraction Z-axis moving assembly 113, wherein the extraction hook mating piece 111 is arranged on the extraction Z-axis moving assembly 113; the extraction Z-axis moving assembly 113 drives the extraction hook mating piece 111 to move up and down or extend and retract in the Z-axis direction; the extraction Z-axis moving assembly 113 is arranged on the extraction X-axis moving assembly 112; the extraction X-axis moving assembly 112 drives the extraction Z-axis moving assembly 113 to move in the X-axis direction.

The extraction X-axis moving assembly 112 is arranged inside the operation compartment 1. The extraction Z-axis moving assembly 113 can slide in the X direction along the X-axis moving assembly 112. The extraction Z-axis moving assembly 113 can drive the extraction hook mating piece 111 to move up and down or extend and retract in the Z-axis direction. As shown in FIG. 2, this arrangement not only enables the extraction member 11 to move up and down in the Z-axis direction, but also allows the travel range in the X-axis direction to define the X-axis motion path as required. This provides the extraction member 11 with maximum movement space and an optimized path for separately mating with the cryovials and/or cryovial sleeve barrels and/or transfer tank S6 cover and/or the storage compartment cover S7 of the storage compartment.

In a preferred further embodiment of this example, the extraction hook mating piece 111 further includes an extraction rod 1113, an extraction sleeve 1114 and a male snap-fit member 1111, wherein the extraction sleeve 1114 is sleeved around the extraction rod 1113, and the extraction rod 1113 can move up and down in the extraction sleeve 1114 relative to the extraction sleeve 1114; the extraction rod 1113 and the extraction sleeve 1114 can move up and down in the Z-axis direction; the male snap-fit member 1111 is arranged at the lower end of the extraction rod 1113.

When a target needs to be extracted, the process starting with extracting the cryovials from the transfer tank S6 is taken as an example. The transfer tank S6 is moved into the operation compartment and positioned at the corresponding position of the extraction member. The extraction rod 1113 and the extraction sleeve 1114 can descend simultaneously. When the lower end of the extraction sleeve 1114 descends to the opening of the transfer tank S6, it stops descending, while the extraction rod 1113 continues to descend into the transfer tank S6 to extract the cryovials or cryovial sleeve barrels inside the transfer tank. The extraction described herein refers to snap-fitting between the female snap-fit member and the male snap-fit member, which limits extraction in the vertical direction. After the cryovials or cryovial sleeve barrels are extracted, the extraction rod 1113 retracts upward, and the extraction sleeve 1114 stays at its just-stopped position to wait for the extraction rod 1113 until the extraction rod lifts the cryovials or cryovial sleeve barrels into the extraction sleeve 1114. Once the extracted item is at least partially surrounded or wrapped by the extraction sleeve 1114, the extraction rod 1113 and the extraction sleeve 1114 move upward simultaneously until reaching the target height. Advantages of such arrangement are as follows: the extraction sleeve 1114 protects the extracted cryovials and provides a relatively stable moving environment space; due to low-temperature storage requirements, the cryovials will be subjected to ambient temperature interference the moment they are lifted out of the transfer tank S6.

Upon reaching the target height, the X-axis moving assembly 112 drives the extraction rod and the extraction sleeve (together with the cryovials or cryovial sleeve barrels held therebetween) to travel on the X-axis to the storage opening of the storage compartment. During this process, the extraction sleeve 1114 continuously provides stabile protection for the extracted target.

In a preferred further embodiment of this example, the extraction Z-axis moving assembly 113 includes a Z-axis support frame 1131, a drive chain 1132 and a Z-axis drive cylinder 1133, wherein the lower end of the Z-axis support frame 1131 is slidably arranged on the X-axis moving assembly 112; one side of the Z-axis support frame 1131 close to the extraction sleeve 1114 is provided with a Z-axis vertical rail 1134; the Z-axis drive cylinder 1133 drives the extraction sleeve 1114 to move up and down on the Z-axis vertical rail 1134; the drive chain 1132 drives the extraction rod 1113 to move up and down.

The drive chain 1132 drives the extraction rod 1113 to move downward until the male snap-fit member is snap-fitted onto the female snap-fit member. Such snap-fitting mating limits the male snap-fit member in the vertical direction.

It should be noted that by utilizing the flexibility of the drive chain 1132 in combination with the up and down movement of the extraction sleeve 1114, this technical solution not only achieves the up and down movement of the extraction rod 1113 itself, but also realizes more stable mating with the extraction sleeve 1114.

In a preferred further embodiment of this example, the extraction Z-axis moving assembly includes the Z-axis support frame 1131 which is slidably connected with the X-axis moving assembly 112 in the X-axis direction; the side of the Z-axis support frame 1131 is connected with the Z-axis vertical rail 1134; the Z-axis drive cylinder 1133 is arranged on the Z-axis vertical rail 1134; the Z-axis drive cylinder 1133 can drive the extraction sleeve 1114 to lift independently; the extraction sleeve 1114 is sleeved outside the extraction rod 1113; the extraction sleeve 1114 provides guidance for the extraction rod 1113, thereby ensuring that the extraction rod 1113 continuously lifts along the extraction sleeve 1114 and guaranteeing that the extraction rod 1113 does not offset in the Z-axis during grabbing.

Preferably, the drive chain 1132 includes a drive motor, a drive gear and a chain, wherein the upper end of the Z-axis support frame 1131 is provided with the drive motor; the drive motor is connected with the drive gear; the drive gear drives the chain to rotate; one end of the chain is connected with the upper end of the extraction rod 1113; the chain can drive the extraction rod 1113 to lift; the lower end of the extraction rod 1113 is fixedly connected with the male snap-fit member 1111, i.e., the drive chain 1132 can drive the extraction rod 1113 and the male snap-fit member 1111 to lift.

Preferably, the drive chain 1132 can adopt any drive lifting device in the existing technology, as long as it can drive the extraction rod 1113 to lift.

Further, the lower end of the extraction rod 1113 extends downward to form a semi-arc end 11113 with a central cavity; the lower end surface of the semi-arc end 11113 is connected with the snap-fit plate 11111; one side end of the snap-fit plate 11111 is recessed inward to form a male snap-fit groove 11112; the semi-arc end 11113 and the snap-fit plate 11111 form the male snap-fit member 1111. The semi-arc end 11113 is arranged. Such a shape arrangement allows favorable mating with cryovials or cryovial sleeve barrels (the upper ends of the cryovials and cryovial sleeve barrels are relatively narrow and cylindrical, and the semi-arc end 11113 enables superior mating therewith). Meanwhile, it can stably transfer the transfer tank S6 cover and the storage compartment cover S7 of the storage compartment.

Preferably, the snap-fit plate 11111 can engage with the extraction handle 11121 on the cryovial sleeve barrels and the storage compartment cover S7.

Further, the male snap-fit groove 11112 includes an inner groove section and an outer groove section, wherein the outer side of the inner groove section is connected with the outer groove section; the outer groove section is gradually narrowed from outside to inside; the inner groove section is U-shaped.

Preferably, the lower end surface of the semi-arc end 11113 is fixedly connected with the snap-fit plate 11111; the snap-fit plate 11111 is provided with the male snap-fit groove 11112; the outer groove section of the male snap-fit groove 11112 is a guiding end which can allow the extraction handle 11121 to smoothly enter the inner groove section of the male snap-fit groove 11112; the snap-fit plate 11111 can support the extraction handle 11121 during transfer.

Further, the extraction hook mating piece 111 includes the male snap-fit member 1111; each of the cryovials and/or the cryovial sleeve barrels and/or the transfer tank S6 cover and/or the storage compartment cover S7 of the storage compartment 2 is provided with a female snap-fit member 19; the male snap-fit member 1111 can be snap-fitted onto the female snap-fit member 19; and the female snap-fit member 19 limits the male snap-fit member 1111 in the vertical direction.

Further, the lower end of the extraction sleeve 1114 extends outward to form a fixing sleeve 1115; the snap-fit plate 11111 is arranged below the fixing sleeve 1115.

Preferably, the fixing sleeve 1115 can engage with the straw barrel S1 during lifting, ensuring that the straw barrel S1 does not shake; the snap-fit plate 11111 can lift the extraction handle 11121 on the straw barrel S1, thereby conducting stable transfer.

Preferably, the extraction sleeve 1114 is fixedly connected with the fixing sleeve 1115, i.e., the Z-axis drive cylinder 1133 can drive the extraction sleeve 1114 and the fixing sleeve 1115 to lift along the Z-axis vertical rail 1134.

Further, the fixing sleeve 1115 is vertically slidably connected with the extraction rod 1113.

Preferably, both the fixing sleeve 1115 and the extraction rod 1113 can be allowed to lift independently.

Further, the side wall of the fixing sleeve 1115 is provided with a limiting opening 1116; the limiting opening 1116 can engage with a limiting block arranged on the transfer tank S6 cover and/or the storage compartment cover S7 of the storage compartment.

Preferably, the limiting block arranged on the transfer tank S6 cover and/or the storage compartment cover S7 of the storage compartment can be an extraction snap-fit block 11122, or another limiting block. The limiting opening 1116 can limit the limiting block, thereby preventing the transfer tank S6 cover or the storage compartment cover S7 of the storage compartment from shaking during transfer.

Further, the upper end of the extraction rod 1113 is provided with an extraction rod limiting block for limiting the extraction height of the extraction rod 1113 in the Z-axis direction.

Preferably, the upper end side of the extraction rod 1113 is connected with the extraction rod limiting block, and the extraction rod limiting block is located inside the extraction sleeve 1114 and slides vertically along with the extraction rod 1113; the Z-axis support frame 1131 is connected with a limiting rod (not shown) which is arranged above the extraction rod 1113 and close to the lower side of the drive motor to limit the extraction height of the extraction rod 1113 in the Z-axis direction.

Further, the lower end of the extraction sleeve 1114 is provided with a stop block; the stop block is located between the extraction sleeve 1114 and the extraction rod 1113, and limits the extension length of the extraction rod 1113.

Preferably, the stop block and the extraction rod limiting block are aligned on the same vertical line. The extraction sleeve 1114 drives the stop block to lift. When the extraction rod 1113 drives the extraction rod limiting block to descend to the lowest position of the extraction sleeve 1114, the stop block blocks the further descending of the extraction rod limiting block, thereby preventing the extraction rod 1113 from separating from the extraction sleeve 1114, which results in loss of position limitation when extracting the extracted workpiece and eliminating the shaking during transfer motion.

Further, the operation compartment 1 also includes a cover moving mechanism 12. The cover moving mechanism 12 is located above the opening of the storage compartment 2. The cover moving mechanism 12 includes a cover moving plate base 121 and a Y-axis slide rail 122; the cover moving plate base 121 is slidably arranged on the Y-axis slide rail 122.

Further, the upper end surface of the storage compartment cover S7 of the storage compartment 2 is provided with an extraction handle 11121. The extraction handle 11121 can be snap-fitted with the male snap-fit member 1111.

Preferably, the extraction member 11 can extract the storage compartment cover S7 of the storage compartment 2 and place it on the cover moving plate base 121. Subsequently, the cover moving plate base 121 drives the storage compartment cover S7 to translate in the Y-axis direction to a position that does not interfere with storage operation.

Further, the upper end surface of the storage compartment cover S7 of the storage compartment 2 is provided with the extraction handle 11121 and an extraction snap-fit block 11122. The extraction handle 11121 and the extraction snap-fit block 11122 form the female snap-fit member 19 of the storage compartment cover S7. The extraction handle 11121 is snap-fitted with the male snap-fit groove 11112 of the snap-fit plate 11111; the extraction snap-fit block 11122 engages with the limiting opening 1116 of the fixing sleeve 1115.

Preferably, by snap-fitting the extraction handle 11121 with the male snap-fit groove 11112 of the snap-fit plate 11111, the snap-fit plate 11111 hooks the extraction handle 11121 to limit vertical movement thereof. The limiting opening 1116 formed on the fixing sleeve 1115 can engage with the extraction snap-fit block 11122, thereby preventing the storage compartment cover S7 from shaking left and right during transfer.

Further, the extraction handle 11121 is cylindrical; a truncated cone is formed at the upper free end of the extraction handle for snap-fit mating; the extraction snap-fit block 11122 is arranged beside the extraction handle 11121 and is a roughly trapezoidal block; the extraction snap-fit block engages with the male snap-fit groove 11112 of the snap-fit plate 11111.

Preferably, the snap-fit plate 11111 can hook the truncated cone and thus lift the storage compartment cover S7. The extraction snap-fit block 11122 engages with the limiting opening 1116 for position limitation.

Preferably, when extracting the storage compartment cover S7, the snap-fit plate 11111 can snap and lift the extraction handle 11121, and meanwhile the limiting opening 1116 on the fixing sleeve 1115 engages with the extraction snap-fit block 11122 to ensure that the storage compartment cover S7 does not rotate during transfer.

Further, the storage compartment 2 is also provided with a cover opening mechanism 22. The cover opening mechanism 22 can open the transfer tank S6 cover.

Further, the storage compartment 2 also includes a central rotating shaft 23 and a honeycomb plate 24, wherein the honeycomb plate 24 is rotatably arranged on the central rotating shaft 23; multiple cryovials and/or cryovial sleeve barrels with the cryovials inside can be inserted into the honeycomb plate 24.

The upper ends of the cryovial and cryovial sleeve barrel are each provided with the extraction handle 11121. The extraction handle 11121 is cylindrical. The truncated cone is formed at the upper free end of the extraction handle for snap-fit mating.

Further, the upper end of the cryovial sleeve barrel is flared.

Preferably, the cryovial sleeve barrel includes straw barrels S1 and straw barrel sleeves S2. The cryovials are stored inside the straw barrels S1, and the extraction handle 11121 is arranged on the upper end surface of the straw barrel S1. The upper end of the straw barrel sleeve S2 is flared, and the straw barrel sleeve S2 is arranged on a honeycomb plate 24. A plurality of honeycomb holes are formed in the honeycomb plate 24, and the straw barrel sleeves S2 can be accommodated within the honeycomb holes. Since the upper end of each straw barrel sleeve S2 is flared, the honeycomb plate 24 can support the straw barrel sleeves S2. The straw barrels S1 can be placed in the straw barrel sleeves S2, and liquid nitrogen is contained inside the straw barrel sleeves S2 to provide buffering for the straw barrels S1.

Further, the storage compartment 2 also includes a support barrel 25. The lower end of the central rotating shaft 23 is connected with the support barrel 25, while the upper end of the central rotating shaft 23 is provided with a rotating shaft drive 26. The rotating shaft drive 26 drives the central rotating shaft 23 to rotate. Liquid nitrogen is contained in the storage compartment 2.

Preferably, the rotating shaft drive 26 can drive the central rotating shaft 23 to rotate. The central rotating shaft 23 in turn drives the honeycomb plate 24 to rotate. The support barrel 25 can support the honeycomb plate 24.

Further, the operation compartment 1 also includes a barcode scanner 18. The barcode scanner 18 is arranged at one side of the extraction member 11.

Preferably, the barcode scanner 18 is arranged at a position close to the lower end of the Z-axis support frame 1131 and located at one side of the extraction hook mating piece 111, so as to facilitate scanning and identification when the extraction hook mating piece 111 extracts the straw barrels S1 or cryovials.

Further, the biological sample storage system also includes a lifting mechanism 3. The lifting mechanism 3 is arranged at one side of the storage compartment 2 and located below the operation compartment 1, and is capable of lifting the transfer tank S6 to enter the operation compartment 1.

Further, the lifting mechanism 3 includes a connecting frame 31, a lifting frame 32 and a support guide rail 33, wherein the connecting frame 31 is connected with the outer wall of the storage compartment 2, and the lower end of the connecting frame 31 is provided with the support guide rail 33; the lifting frame 32 is vertically slidably connected with the support guide rail 33; the support guide rail 33 can drive the lifting frame 32 to lift.

Preferably, the transfer tank can be placed on the lifting frame 32. The drive device on the support guide rail 33 can drive the lifting frame 32 to lift, and the lifting frame 32 is vertically slidably connected with the support guide rail 33.

Further, a liquid nitrogen valve assembly 29 is arranged at the side of the storage compartment 2; a support base and a wheel assembly are arranged at the bottom end of the storage compartment 2.

Preferably, the capacity of the liquid nitrogen inside the storage compartment 2 can be monitored in real time via the liquid nitrogen valve assembly 29.

Preferably, the access passage can be closed by the storage compartment cover S7 of the storage compartment.

The working principle of the device is as follows: first, the drive device arranged on the support guide rail 33 drives the lifting frame 32 to lift the transfer tank S6 into mating with the operation compartment 1 for entry into the operation compartment 1. Next, the cover opening mechanism 22 opens the transfer tank S6 cover. The extraction member 11 moves above the transfer tank S6, and the extraction hook mating piece 111 temporarily places the internal straw barrel S1 inside the operation compartment 1. During extraction, the barcode scanner 18 performs scanning and identification on the straw barrel S1. Thereafter, the extraction member 11 moves above the storage compartment cover S7 of the storage compartment. The male snap-fit member 1111 arranged on the extraction hook mating piece 111 engages with the female snap-fit member 19 on the storage compartment cover S7 to lift the storage compartment cover S7. Then the cover moving mechanism 12 slides to a position below the male snap-fit member 1111, and the extraction member 11 places the storage compartment cover S7 onto the cover moving plate base 121. The cover moving plate base 121 moves along the Y-axis slide rail 122 in the Y-axis direction to shift the storage compartment cover S7 aside. Subsequently, the extraction member 11 lifts the straw barrel S1 temporarily stored in the operation compartment 1, conveys the straw barrel S1 into the storage compartment 2 through the access passage, and places the straw barrel S1 into the straw barrel sleeve S2 on the honeycomb plate 24 to realize cryopreservation of cryovials. After storage is completed, the extraction member 11 withdraws from the storage compartment 2 and ascends a certain distance. The cover moving mechanism 12 then drives the storage compartment cover S7 to a position below the extraction member 11, and the extraction member 11 grabs the storage compartment cover S7. The cover moving mechanism 12 returns to its initial position, and the extraction member 11 places the storage compartment cover S7 over the access passage. The cover opening mechanism 22 fits the transfer tank S6 cover back onto the transfer tank S6. Finally, the lifting mechanism 3 drives the transfer tank S6 away from the operation compartment 1 to stand by for subsequent operations.

Importantly, it should be noted that the configurations and arrangements of the present application shown in multiple different exemplary embodiments are only illustrative. Although several embodiments are only described in detail in the disclosure here, persons who refer to the disclosure will readily appreciate that many modifications may be possible (for example, sizes, scales, structures, shapes and proportions of various elements, as well as parameters (for example, temperature, pressure, etc.), installation arrangement, use of materials, color, change in orientation, etc.) without substantially departing from the novel teachings and advantages of the subject described in the present application. For example, an element shown as being integrally formed may be composed of multiple parts or elements, the positions of the elements may be reversed or otherwise varied, and the nature or number or position of discrete elements may be altered or varied. Therefore, all of such modifications are intended to be included within the scope of the present disclosure. The order or sequence of any processes or method steps is changed or rearranged according to alternative embodiments. In claims, any clause of "means plus function" is intended to cover the structures described herein for implementing the functions, and is not only structurally equivalent but also an equivalent structure. Other replacements, modifications, changes and omissions can be made in the design, running state and arrangement of exemplary embodiments without departing from the scope of the present disclosure. Therefore, the present disclosure is not limited to specific embodiments, but extends to various modifications which still fall within the scope of the appended claims.

In addition, all features (i.e., those features irrelevant to the best mode presently contemplated for carrying out the present disclosure, or those features irrelevant to implementing the present disclosure) of actual embodiments can be not described in order to provide the brief description of exemplary embodiments.

It should be understood that a large number of specific embodiments can be made in the development process of any actual embodiments such as any projects or design items. Such development efforts might be complex and time-consuming, but would not require undue experimentation for ordinary technicians having the benefit of this disclosure, which would be a routine work of design, manufacture and production.

It should be noted that the embodiments described above are merely for illustrating, but not limiting, the technical solutions of the present disclosure. Although the present disclosure has been described in detail with reference to preferred embodiments, persons of ordinary skill in the art should understood that the technical solutions of the present disclosure can be amended or equivalently replaced, all of which should be covered within the scope of claims of the present disclosure without departing from the spirit and scope of the technical solutions of the present disclosure.

## Claims

1. A biological sample storage system, comprising an operation compartment and a storage compartment, **characterized in that** the operation compartment is arranged above the storage compartment and configured to extract or store sample tubes in the storage compartment;
an extraction member is arranged in the operation compartment; the extraction member is provided with an extraction hook mating piece; the extraction hook mating piece mates with and extracts cryovials and/or cryovial sleeve barrels and/or a transfer tank cover and/or a storage compartment cover of the storage compartment.

2. The biological sample storage system according to claim 1, **characterized in that** the extraction hook mating piece comprises a male snap-fit member; each of the cryovials and/or cryovial sleeve barrels and/or transfer tank cover and/or storage compartment cover of the storage compartment is provided with a female snap-fit member; the male snap-fit member is snap-fitted onto the female snap-fit member; the female snap-fit member limits the male snap-fit member in the vertical direction.

3. The biological sample storage system according to claim 1 or 2, **characterized in that** the extraction member comprises an extraction X-axis moving assembly and an extraction Z-axis moving assembly, wherein the extraction hook mating piece is arranged on the extraction Z-axis moving assembly; the extraction Z-axis moving assembly drives the extraction hook mating piece to move up and down or extend and retract in the Z-axis direction; the extraction Z-axis moving assembly is arranged on the extraction X-axis moving assembly; the extraction X-axis moving assembly drives the extraction Z-axis moving assembly to move in the X-axis direction.

4. The biological sample storage system according to claim 3, **characterized in that** the extraction hook mating piece further comprises an extraction rod, an extraction sleeve and a male snap-fit member, wherein the extraction sleeve is sleeved around the extraction rod, and the extraction rod moves up and down in the extraction sleeve relative to the extraction sleeve; the extraction rod and the extraction sleeve move up and down in the Z-axis direction; the male snap-fit member is arranged at the lower end of the extraction rod.

5. The biological sample storage system according to claim 4, **characterized in that** the extraction Z-axis moving assembly comprises a Z-axis support frame, a drive chain and a Z-axis drive cylinder, wherein the lower end of the Z-axis support frame is slidably arranged on the extraction X-axis moving assembly; a Z-axis vertical rail is arranged at one side of the Z-axis support frame close to the extraction sleeve; the Z-axis drive cylinder drives the extraction sleeve to move up and down on the Z-axis vertical rail; the drive chain drives the extraction rod to move up and down.

6. The biological sample storage system according to claim 4, **characterized in that** the lower end of the extraction rod extends downward to form a semi-arc end with a central cavity, and the lower end surface of the semi-arc end is connected with a snap-fit plate; one side end of the snap-fit plate is recessed inward to form a male snap-fit groove; and the semi-arc end and the snap-fit plate form the male snap-fit member.

7. The biological sample storage system according to claim 6, **characterized in that** the male snap-fit groove comprises an inner groove section and an outer groove section, wherein the outer side of the inner groove section is connected with the outer groove section; the outer groove section is gradually narrowed from outside to inside; the inner groove section is U-shaped.

8. The biological sample storage system according to any one of claims 4-7, **characterized in that** the lower end of the extraction sleeve extends outward to form a fixing sleeve, and the snap-fit plate is arranged below the fixing sleeve.

9. The biological sample storage system according to claim 8, **characterized in that** a limiting opening is formed in the side wall of the fixing sleeve; the limiting opening engages with a limiting block arranged on the transfer tank cover and/or the storage compartment cover of the storage compartment.

10. The biological sample storage system according to claim 9, **characterized in that** the upper end of the extraction rod is provided with an extraction rod limiting block for limiting the extraction height of the extraction rod in the Z-axis direction.

11. The biological sample storage system according to claim 9 or 10, **characterized in that** the lower end of the extraction sleeve is provided with a stop block; the stop block is located between the extraction sleeve and the extraction rod and limits the extension length of the extraction rod.

12. The biological sample storage system according to claim 1, 2, 4, 5, 6, 7, 9 or 10, **characterized in that** the operation compartment further comprises a cover moving mechanism, and the cover moving mechanism is located above the opening of the storage compartment; the cover moving mechanism comprises a cover moving plate base and a Y-axis slide rail; the cover moving plate base is slidably arranged on the Y-axis slide rail.

13. The biological sample storage system according to claim 2, 4, 5, 6 or 7, **characterized in that** the upper end surface of the storage compartment cover of the storage compartment is provided with an extraction handle; the extraction handle is snap-fitted with the male snap-fit member.

14. The biological sample storage system according to claim 9 or 10, **characterized in that** the upper end surface of the storage compartment cover of the storage compartment is provided with the extraction handle and an extraction snap-fit block; the extraction handle and the extraction snap-fit block form the female snap-fit member of the storage compartment cover; the extraction handle is snap-fitted with the male snap-fit groove of the snap-fit plate; the extraction snap-fit block engages with the limiting opening of the fixing sleeve.

15. The biological sample storage system according to claim 14, **characterized in that** the extraction handle is cylindrical, and a truncated cone is formed at the upper free end of the extraction handle for snap-fit mating; the extraction snap-fit block is arranged beside the extraction handle and is a roughly trapezoidal block; the extraction snap-fit block engages with the male snap-fit groove of the snap-fit plate.

16. The biological sample storage system according to claim 1, **characterized in that** the storage compartment is further provided with a cover opening mechanism; and the cover opening mechanism is configured to open the cover of the transfer tank.

17. The biological sample storage system according to claim 1, 2, 4, 5, 6, 7, 9 or 10, **characterized in that** the storage compartment further comprises a central rotating shaft and a honeycomb plate; the honeycomb plate is rotatably arranged on the central rotating shaft; a plurality of cryovials and/or cryovial sleeve barrels with the cryovials inside are inserted into the honeycomb plate;
both the upper ends of the cryovial and the cryovial sleeve barrel are provided with extraction handles; the extraction handle is cylindrical, and a truncated cone is formed in the upper free end of the extraction handle for snap-fit mating.

18. The biological sample storage system according to claim 17, **characterized in that** the upper end of the cryovial sleeve barrel is flared.

19. The biological sample storage system according to claim 17, **characterized in that** the storage compartment further comprises a support barrel; the lower part of the central rotating shaft is connected with the support barrel; a rotating shaft drive is arranged above the central rotating shaft; the rotating shaft drive rotates the central rotating shaft, and liquid nitrogen is contained in the storage compartment.

20. The biological sample storage system according to claim 1, 2, 4, 5, 6, 7, 9, 10, 16 or 18, **characterized in that** the operation compartment further comprises a barcode scanner; the barcode scanner is arranged at one side of the extraction member.

21. The biological sample storage system according to claim 1, 2, 4, 5, 6, 7, 9, 10, 16 or 18, further comprising a lifting mechanism, wherein the lifting mechanism is arranged at one side of the storage compartment and located at the lower end of the operation compartment for lifting the transfer tank to enter the operation compartment.

22. The biological sample storage system according to claim 21, **characterized in that** the lifting mechanism comprises a connecting frame, a lifting frame and a support guide rail, wherein the connecting frame is connected with the outer wall of the storage compartment; the lower end of the connecting frame is provided with the support guide rail; the support guide rail is vertically slidably connected with the lifting frame; the support guide rail drives the lifting frame to lift.

23. The biological sample storage system according to claim 20, **characterized in that** a liquid nitrogen valve assembly is arranged at the side of the storage compartment; a support base and a wheel assembly are arranged at the bottom end of the storage compartment.

24. The biological sample storage system according to claim 8, **characterized in that** the fixing sleeve is vertically slidably connected with the extraction rod.
